# NOUVEAU FASCICULE DE BREVET EUROPEEN

(11) **EP 1 749 699 B2**
(45) Date de publication et mention de la décision concernant l'opposition: **26.02.2014**
(45) Mention de la délivrance du brevet: 10.09.2008
(21) Numéro de dépôt: 06291235.7
(22) Date de dépôt: 28.07.2006
(51) Int. Cl.: B60R 5/04

(54) **Bavette de recouvrement de l'espace un dossier de siège et un élément de recouvrement d'un compartiment à bagages**
Abdeckung für den Raum zwischen einer Rücklehne und einem Flächengebilde für eine Laderaumabdeckung
Cover for the space between a seat back and a luggage compartment cover

(30) Priorité: 02.08.2005 FR 0552418
(43) Date de publication de la demande: 07.02.2007
(73) Titulaire: Centre d'étude et de recherche pour l'automobile (CERA), 51100 Reims (FR)
(72) Inventeur: Montagne, Frédéric, 51150 Tours sur Marne (FR); Palomo, Antonio, 51220 Cormicy (FR)
(74) Mandataire: Sayettat, Julien Christian

(56) Documents cités:
- EP-A- 1 350 673
- DE-A1- 10 109 651
- DE-A1- 10 113 623
- DE-A1- 10 335 055
- PATENT ABSTRACTS OF JAPAN vol. 011, no. 057 (M-564), 21 février 1987 (1987-02-21) & JP 61 218453 A (NISSAN MOTOR CO LTD), 27 septembre 1986 (1986-09-27)
- PATENT ABSTRACTS OF JAPAN vol. 010, no. 014 (M-447), 21 janvier 1986 (1986-01-21) & JP 60 174343 A (NISSAN JIDOSHA KK), 7 septembre 1985 (1985-09-07)

## Description

L'invention conceme un dispositif de recouvrement d'un compartiment à bagages de véhicule automobile.

Il est connu de recouvrir un compartiment à bagages de véhicule automobile, délimité en partie avant par au moins un dossier de siège arrière, par un élément de recouvrement, tel qu'une tablette ou un cache bagages enroulable comprenant un rideau souple de recouvrement enroulable dans un carter. Un tel élément est monté sur les ébénisteries latérales de garniture du compartiment à bagages.

Le cas échéant, si l'élément est une tablette, elle peut être montée articulée en rotation, dans sa partie avant, ceci de sorte à faciliter l'accès aux bagages.

Lorsque le siège arrière est réglable, notamment par déplacement longitudinal dudit siège et/ou par inclinaison du dossier, un espace est créé entre le bord avant de l'élément de recouvrement et le dossier de siège arrière, ce qui est préjudiciable en termes d'esthétique et de fonction de recouvrement des bagages.

Il en est de même lorsque plusieurs sièges indépendants, réglables individuellement, sont disposés à l'arrière du véhicule, comme c'est le cas pour des sièges fractionnés de type « 1/3-2/3 » ou pour des sièges individuels. Dans une telle configuration, il peut se former des espaces de largeur variable selon le réglage de chaque siège.

DE 101 09 651 décrit un dispositif selon le préambule de la revendication 1.

L'invention a pour but de pallier ces inconvénients en proposant un dispositif de recouvrement d'un compartiment à bagages de véhicule automobile agencé pour occulter tout l'espace entre ledit dispositif et le dossier d'un siège arrière dans toutes les positions longitudinales du dossier.

A cet effet, l'invention propose un dispositif de recouvrement d'un compartiment à bagages de véhicule automobile, selon la revendication 1.

Une telle réalisation permet, au moyen de la bavette mobile, d'assurer un recouvrement de l'espace pour toute position longitudinale du dossier.

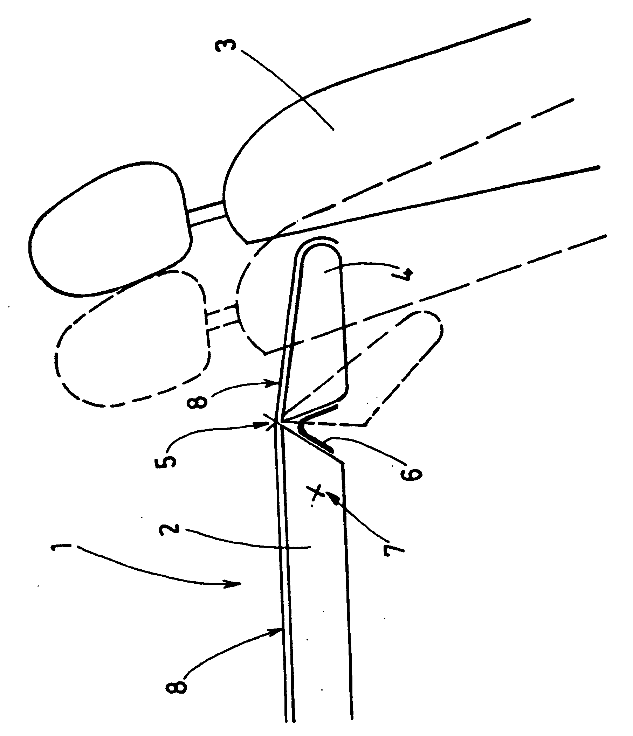

D'autres particularités et avantages de l'invention apparaîtront dans la description qui suit, faite en référence à la figure jointe, qui est une représentation schématique partielle en coupe longitudinale d'un dispositif selon l'invention, la bavette étant en première (trait plein) et en deuxième (trait pointillé) position, le dispositif étant disposé contre un dossier de siège arrière en position avancée (trait plein) et en position reculée (trait pointillé).

Dans la suite de ce descriptif, les termes de positionnement dans l'espace (avant, arrière, longitudinal, transversal,...) sont pris en référence au dispositif monté dans un véhicule automobile.

En référence à la figure, on décrit à présent un dispositif de recouvrement 1 d'un compartiment à bagages de véhicule automobile comprenant un élément de recouvrement 2 monté sur les ébénisteries latérales de garniture du compartiment à bagages. Le compartiment est délimité en partie avant par au moins un dossier 3 de siège arrière déplaçable longitudinalement, par réglage de l'inclinaison dudit dossier.

En variante non représentée, le déplacement longitudinal du dossier 3 peut être provoqué par déplacement longitudinal du siège, par exemple par son glissement sur des glissières de réglage.

Le dispositif 1 comprend en outre une bavette rigide 4 montée mobile en rotation, selon un axe transversal 5, le long du bord avant de l'élément 2, entre une première position où elle est sensiblement coplanaire à l'élément 2 et disposée sensiblement horizontalement et une deuxième position où elle est inclinée par rapport à l'élément 2.

L'inclinaison de la bavette 4 est produite par appui du dossier 3 contre ladite bavette lors du déplacement dudit dossier vers l'arrière.

Un moyen de rappel 6 est prévu pour rappeler la bavette 4 vers la première position, de sorte à occulter l'espace entre l'élément 2 et le dossier 3, quelle que soit la position longitudinale dudit dossier. Ainsi, le bord avant de la bavette 4 est en appui permanent contre le dossier 3, et ce, quelque soit sa position longitudinale.

Selon la réalisation représentée, l'élément de recouvrement 2 est une tablette rigide. En outre, la tablette est montée articulée en rotation selon un axe secondaire 7 sur les ébénisteries latérales de garniture du compartiment à bagages.

Selon une réalisation non représentée, l'élément de recouvrement 2 est un cache bagages comprenant un rideau enroulable et un carter de réception dudit rideau en position enroulée, la bavette 4 étant associée en rotation audit carter. Dans cette réalisation, le carter est monté par ses extrémités sur les ébénisteries latérales de garniture du compartiment à bagages, à proximité du dossier 3 de siège arrière.

Selon la réalisation présentée, la bavette 4 est inclinée vers le bas lorsqu'elle est dans sa deuxième position.

En variante non représentée, la bavette 4 est inclinée vers le haut lorsqu'elle est dans sa deuxième position.

Selon une réalisation non représentée, le dispositif 1 comprend au moins deux bavettes 4, chacune desdites bavettes correspondant à un dossier 3 de siège en face duquel elle est destinée à être placée.

Ainsi, lorsque au moins deux dossiers 3 de sièges sont positionnés longitudinalement de manière différente, chaque bavette 4 correspondante assure une fonction de recouvrement de l'espace créé entre chacun desdits dossier et l'élément de recouvrement 2.

Selon une réalisation, le moyen de rappel 6 est formé d'un ressort à lame, ledit ressort étant agencé pour rappeler la bavette 4 vers la première position. A cet effet, le moyen de rappel 6 est placé sous l'axe transversale 5 et prend appui d'une part contre une paroi de l'élément 2 et d'autre part contre une paroi de la bavette 4.

Selon la réalisation représentée, l'axe 5 est formé par une charnière souple, ladite charnière étant formée par un matériau de revêtement 8 recouvrant simultanément l'élément de recouvrement et la bavette. Cette réalisation s'applique particulièrement lorsque l'élément 2 est une tablette, le matériau de revêtement 8 étant par exemple une moquette ou un textile.

## Revendications

1. Dispositif de recouvrement (1) d'un compartiment à bagages de véhicule automobile, ledit compartiment étant délimité en partie avant par au moins un dossier (3) de siège arrière déplaçable longitudinalement, ledit dispositif comprenant un élément de recouvrement (2) monté sur les ébénisteries latérales du compartiment, ledit dispositif comprenant en outre au moins une bavette (4) rigide montée mobile en rotation, selon un axe transversal (5), le long du bord avant dudit élément, entre une première position où elle est sensiblement coplanaire à l'élément de recouvrement (2) et une deuxième position où elle est inclinée par rapport à l'élément de recouvrement (2), l'inclinaison de ladite bavette étant réalisée par appui dudit dossier contre ladite bavette lors du déplacement dudit dossier vers l'arrière, un moyen de rappel (6) étant prévu pour rappeler ladite bavette vers la première position, de sorte à occulter l'espace entre ledit élément et ledit dossier, quelle que soit la position longitudinale dudit dossier, ledit dispositif étant **caractérisé en ce qu'**il comprend en outre, issus des ébénisteries latérales, des paliers permettant un appui des côtés arrières de la bavette (4) lorsqu'elle est en première position, le désengagement de ladite bavette desdits appuis se produisant par un déplacement vers l'avant de l'élément (2) lors de l'inclinaison de ladite bavette vers la deuxième position.

2. Dispositif selon la revendication 1, **caractérisé en ce que** l'élément de recouvrement (2) est une tablette rigide.

3. Dispositif selon la revendication 1, **caractérisé en ce que** l'élément de recouvrement est un cache bagages comprenant un rideau enroulable et un carter de réception dudit rideau en position enroulée, la bavette (4) étant associée en rotation audit carter.

4. Dispositif selon l'une quelconque des revendications 1 à 3, **caractérisé en ce que** la bavette (4) est inclinée vers le bas lorsqu'elle est dans sa deuxième position.

5. Dispositif selon l'une quelconque des revendications 1 à 4, **caractérisé en ce qu'**il comprend au moins deux bavettes (4) alignées, chacune desdites bavettes correspondant à un dossier (3) de siège en face duquel elle est destinée à être placée.

6. Dispositif selon l'une quelconque des revendications 1 à 5, **caractérisé en ce que** le moyen de rappel (6) est formé d'un ressort à lame, ledit ressort étant agencé pour rappeler la bavette (4) en première position.

7. Dispositif selon l'une quelconque des revendications 1 à 6, **caractérisé en ce que** l'axe (5) est formé par une charnière souple, ladite charnière étant formée par un matériau de revêtement recouvrant simultanément l'élément de recouvrement (2) et la bavette (4).

## Patentansprüche

1. Vorrichtung zur Abdeckung (1) eines Gepäckfaches eines Kraftfahrzeuges, wobei das Fach im Vorderbereich von mindestens einer Rückenlehne (3) eines längs verschiebbaren Rücksitzes begrenzt wird, wobei die Vorrichtung ein Abdeckelement (2) umfasst, das auf den Seitenverkleidungen des Faches montiert ist, wobei die Vorrichtung weiteren mindestens eine steife Klappe (4) umfasst, die gemäß einer Querachse (5) entlang der Vorderkante des Elements drehbar montiert ist, und zwar zwischen einer ersten Position, in der sie im Wesentlichen koplanar zum Abdeckelement (2) ist, und einer zweiten Position, in der sie in Bezug auf das Abdeckelement (2) geneigt ist, wobei die Neigung der Klappe durch das Abstützen der Rückenlehne gegen die Klappe beim Rückwärtsverschieben der Rückenlehne erfolgt, wobei ein Rückstellmittel (6) vorgesehen ist, um die Klappe in ihre erste Position zurückzustellen, so dass der Raum zwischen dem Element und der Rückenlehne verdeckt wird, in welcher Längsposition auch immer sich die Rückenlehne befindet, wobei vorrichtung **dadurch gekennzeichnet, dass** sie des Weiteren Lager umfasst, die aus den Seitenverkleidungen hervorgehen und die eine Auflage der Rückseiten der Klappe (4) ermöglichen, wenn sie sich in der ersten Position befindet, wobei das Lösen der Klappe von den Auflagen durch eine Vorwärtsverschiebung des Elements (2) beim Neigen der Klappe in die zweite Position erfolgt.

2. Vorrichtung nach Anspruch 1, **dadurch gekennzeichnet, dass** das Abdeckelement (2) ein steifes Plateau ist.

3. Vorrichtung nach Anspruch 1, **dadurch gekennzeichnet, dass** das Abdeckelement eine Laderaumabdeckung mit einem einrollbaren Vorhang und einem Aufnahmegehäuse für den besagten Vorhang in der eingerollten Stellung ist, und sich die Klappe (4) mit dem besagten Gehäuse dreht.

4. Vorrichtung nach irgendeinem der Ansprüche 1 bis 3, **dadurch gekennzeichnet, dass** die Klappe (4) nach unten geneigt ist, wenn sie sich in der zweiten Stellung befindet.

5. Vorrichtung nach irgendeinem der Ansprüche 1 bis 4, **dadurch gekennzeichnet, dass** sie zumindest zwei zueinander ausgerichtete Klappen (4) umfasst, wobei jede der besagten Klappen einer Sitzrückenlehne (3) entspricht, der gegenüber sie angebracht werden soll.

6. Vorrichtung nach irgendeinem der Ansprüche 1 bis 5, **dadurch gekennzeichnet, dass** die Rückholvorrichtung (6) aus einer Blattfeder gebildet wird, wobei die besagte Feder angeordnet ist, um die Klappe (4) in die erste Stellung zu holen.

7. Vorrichtung nach irgendeinem der Ansprüche 1 bis 6, **dadurch gekennzeichnet, dass** die Achse (5) durch ein flexibles Scharnier gebildet wird, und das besagte Scharnier durch ein Überzugsmaterial gebildet wird, das das Abdeckelement (2) und die Klappe (4) zugleich bedeckt.

## Claims

1. Device (1) for covering a motor car luggage compartment, said compartment being delimited at the front part by at least one longitudinally movable rear-seat backrest (3), said device comprising a covering element (2) mounted on the lateral enclosures of the compartment, said device also comprising at least one rigid flap (4) mounted so as to be able to move in rotation, on a transverse axis (5), along the front edge of said element, between a first position in which it is substantially co-planar with the covering element (2) and a second position in which is inclined with respect to the covering element (2), the inclination of this flap being effected by abutment of said backrest against said flap when said backrest moves towards the rear, a return means (6) being provided for returning said flap towards the first position, so as to fill in the space between said element and said backrest whatever the longitudinal position of said backrest, said device being **characterised in that** it also comprises, issuing from the lateral enclosures, bearings allowing abutment of the rear sides of the flap (4) when it is in its first position, the disengagement of said flap from said supports occurring through a forward movement of the element (2) when said flap inclines towards the second position.

2. Device according to claim 1, **characterised in that** the covering element (2) is a rigid shelf.

3. Device according to claim 1, **characterised in that** the covering element is a luggage cover comprising a curtain that can be wound and a casing for receiving said curtain in wound position, with the flap (4) being associated in rotation to said casing.

4. Device according to any of claims 1 to 3, **characterised in that** the flap (4) is inclined downwards when it is in its second position.

5. Device according to any of claims 1 to 4, **characterised in that** it comprises at least two aligned flaps (4), each of said flaps corresponding to a backrest (3) of a seat across from which it is intended to be placed.

6. Device according to any of claims 1 to 5, **characterised in that** the means of return (6) is formed of a leaf spring, said spring being arranged in order to return the flap (4) to the first position.

7. Device according to any of claims 1 to 6, **characterised in that** the axis (5) is formed by a flexible hinge, said hinge being formed by a covering material that simultaneously covers the covering element (2) and the flap (4).
